# EUROPÄISCHE PATENTSCHRIFT

(11) **EP 0 828 991 B1**
(45) Veröffentlichungstag und Bekanntmachung des Hinweises auf die Patenterteilung: **22.08.2001**
(21) Anmeldenummer: 96910935.4
(22) Anmeldetag: 27.03.1996
(51) Int. Cl.: G01B 21/24, G01B 11/27, G01D 7/12, G06F 3/16

(54) **VERFAHREN UND VORRICHTUNG ZUM AUSRICHTEN DER WELLE EINER ROTIERENDEN MASCHINE**
METHOD AND DEVICE FOR ALIGNING THE SHAFT OF A ROTATING MACHINE
PROCEDE ET DISPOSITIF POUR CENTRER L'ARBRE D'UNE MACHINE ROTATIVE

(43) Veröffentlichungstag der Anmeldung: 18.03.1998
(73) Patentinhaber: Prüftechnik Dieter Busch AG, 85737 Ismaning (DE)
(72) Erfinder: BUSCH, Dieter, D-85737 Ismaning (DE)
(86) Internationale Anmeldenummer: EP9601337
(87) Internationale Veröffentlichungsnummer: WO9736146

(56) Entgegenhaltungen:
- EP-B- 0 145 745
- DE-A- 4 435 484
- US-A- 4 709 485
- US-A- 5 020 108
- US-A- 5 263 261

## Beschreibung

Die Erfindung bezieht sich auf ein Verfahren zum Ausrichten der Welle einer an vorgegebenen Stützpunkten auf einem Fundament abgestützten rotierenden Maschine in eine vorbestimmte räumliche Sollage durch Verlagern der Maschine bezüglich des Fundaments, wobei
a) die augenblickliche Lage der Welle bezüglich der Sollage mittels einer Sensoreinrichtung festgestellt wird, die der Differenz zwischen der augenblicklichen Lage der Welle und der Wellensollage entsprechende elektrische Lagesignale liefert,
b) aus diesen Lagesignalen, aus der bekannten Position der Stützpunkte bezüglich vorgegebener Bezugspunkte auf dem Fundament und aus anderweitigen geometrischen maschinen- und/- oder fundamentbezogenen geometrischen Meßdaten mittels eines Rechners Korrekturwerte für an den einzelnen Stützpunkten zum Erreichen der Wellensollage jeweils vorzunehmende Lagekorrekturen errechnet werden, und
c) die Korrekturwerte dem die Lagekorrekturen vornehmenden Ausrichtpersonal für jeden Stützpunkt nach Größe und Richtung zur Kenntnis gebracht werden.

Verfahren dieser Art sind z. B. aus EP-B1-0 145 745 bekannt.

Häufig werden die Wellen zweier rotierender Maschinen mittels einer elastischen Kupplung miteinander verbunden, der die Aufgabe zukommt, einen eventuellen gegenseitigen Versatz der beiden Maschinenwellen (Parallelversatz, Winkelversatz), die im Idealfalle genau fluchtrecht ausgerichtet sein sollten, aufzunehmen.

Hochtourige Maschinen und/oder die Übertragung immer größerer Drehmomente verlangen schon bei der Montage der Maschinengruppe eine sehr weitgehende Fluchtung der beiden Wellen, um der Kupplung weniger Arbeit aufzubürden, und diese Ausrichtung wird gemäß den gattungsgemäßen Verfahren durchgeführt. Die mittels der Sensoreinrichtung gewonnenen, in den Rechner eingegebenen Meßwerte verarbeitet der Rechner auf der Grundlage der in ihn ebenfalls eingegebenen geometrischen Abmessungen der auszurichtenden Maschinen, insbesondere der gegenseitigen Position der Stützpunkte der Maschinen auf dem Fundament, zu Korrekturwerten für deren Lagekorrektur in Form von Angaben bzw. Vorschlägen über die vorzunehmenden Korrekturmaßnahmen, wobei für die einzelnen Stützpunkte der auszurichtenden Maschine angezeigt wird, in welcher Richtung und um welchen Betrag diese zu bewegen ist, um in den Fluchtungszustand zu gelangen.

Eine nötige Vertikalkorrektur einer üblichen Maschine (z. B. Pumpe, Motor, Generator) erfolgt meistens durch Unterlegbleche, sogenannte Paßplatten, während eine nötige horizontale Verlagerung der Maschine in der Regel durch Schläge mit einem Vorschlaghammer gegen die Maschinenfüße herbeigeführt wird, nachdem die Befestigungsbolzen gelockert worden sind.

Der bessere Weg des Einsetzens einer Verstellschraube mit einem Gegenanker, mit deren Hilfe die auszurichtende Maschine langsam und exakt bewegt werden könnte, ist meistens nicht gangbar, weil an der Mehrzehl der bereits installierten oder künftig zu installierenden Maschinen derartige Verstellschrauben nicht vorgesehen sind.

Bei der Durchführung der bekannten gattungsgemäßen Verfahren wurden die Korrekturwerte bisher ausschließlich auf einem von dem Rechner gesteuerten Display zur Anzeige gebracht. Dadurch ergab sich für die Hammer-Korrektur das Problem, daß der Maschinenausrichter gleichzeitig sowohl die Anzeige auf dem Display als auch den mit den Hammer-Schlägen zu beaufschlagenden jeweiligen Maschinenfuß betrachten mußte. Die Display-Anzeige gibt ihm an, um wieviel Milimeter bzw. Zehntel eines Milimeters er den Maschinenfuß durch Schlagen noch verlagern muß, und andererseits muß er darauf bedacht sein, den Maschinenfuß nicht durch einen falsch geführten Schlag zu beschädigen. Bereits ein einziger nicht genau gezielter Schlag mit dem schweren Vorschlaghammer kann das Gußgehäuse der Maschine zerstören.

Der Erfindung liegt die Aufgabe zugrunde, dem Maschinenausrichter die Ausrichtarbeit in einer Weise zu erleichtern, die es ihm erlaubt seine volle Aufmerksamkeit den von ihm auf den Maschinenfuß auszuübenden Schlägen zu widmen und so Beschädigungen von diesem zu vermeiden.

Die vorgenannte Aufgabe wird durch die Merkmale des Patentanspruchs 1 gelöst.

Gemäß dem erfindungsgemäßen Verfahren erhält der Maschinenausrichter die zur Durchführung der Korrektur der Maschinenposition nötigen Anweisungen akustisch, so daß er sein Augenmerk voll dem Verrücken des Maschinenfußes widmen kann. Die akustische Anweisung kann gemäß Anspruch 4 als mittels eines elektronisch gesteuerten Tongenerators erzeugtes Tonsignal, aber auch gemäß Anspruch 8 als mittels eines Sprachspeicherbausteins oder eines Sprachsynthesizerbausteins erzeugte sprachliche Anweisung an den Maschinenausrichter übermittelt werden.

Die Unteransprüche 2, 3, 5 - 7 und 9 - 11 betreffen weitere bevorzugte Ausgestaltungen des erfindungsgemäßen Verfahrens, zu denen auch die akustische Übermittlung von Angaben einer rechnergesteuerten Bedienerführung zum Bedienen des Rechners und zur Handhabung der Sensoreinrichtung gehört. Letzteres ist unabhängig von der akustischen Übermittlung der Korrekturwerte insbesondere dann von Vorteil, wenn für die Bedienerführung nur einfache rechnergesteuerte LCD-Anzeigen mit festen Symbolen zur Verfügung stehen, mit denen die optische Benutzeroberfläche nicht so vollkommen beherrscht werden kann, wie dies wünschenswert wäre. Dies ist nur mit sogenannten Pixel-Displays möglich, die aber zusammen mit der hierfür benötigten elektronischen Steuerung teuer und auch nur innerhalb eines ziemlich begrenzten Temperaturbereichs vewendbar sind.

Die Erfindung hat auch eine Vorrichtung zur Durchführung des erfindungsgemäßen Verfahrens zum Gegenstand. Diese Vorrichtung ist in bekannter Weise ausgerüstet mit
a) einer an der auszurichtenden Welle montierten Sensoreinrichtung zum Feststellen der augenblicklichen Lage der Welle bezüglich der Sollage, wobei die sensoreinrichtung der Differnz zwischen der augenblicklichen Wellenlage und der Wellensollage entsprechende elektrische Lagesignale liefert,
b) einem elektronischen Rechner, der aus den in ihn von der Sensoreinrichtung eingespeisten Lagesignalen und aus in ihn eingegebenen, u.a. für die Position der Stützpunkte der Maschine bezüglich Stützpunkten auf dem Fundament charakteristischen geometrischen Meßdaten Korrekturwerte für die an den einzelnen Stützpunkte zum Erreichen der Wellensollage jeweils vorzunehmenden Lagekorrekturen errechnet, und
c) einer Einrichtung, die dem die Lagekorrekturen vornehmenden Ausrichtpersonal die errechneten Korrekturwerte für jeden Stützpunkt nach Größe und Richtung zur Kenntnis bringt,
und sie ist erfindungsgemäß gekennzeichnet durch eine von dem Rechner gesteuerte Einrichtung zum Erzeugen von mindestens für die Größe der errechneten Korrekturwerte charakteristischen akustischen Signalen.

Die Unteransprüche 13 bis 16 betreffen bevorzugte Ausgestaltungen des Gegenstandes des Patentanspruchs 12.

Die Erfindung wird nachstehend anhand der Zeichnung an Ausführungsbeispielen noch näher erläutert.

In der Zeichnung zeigt:

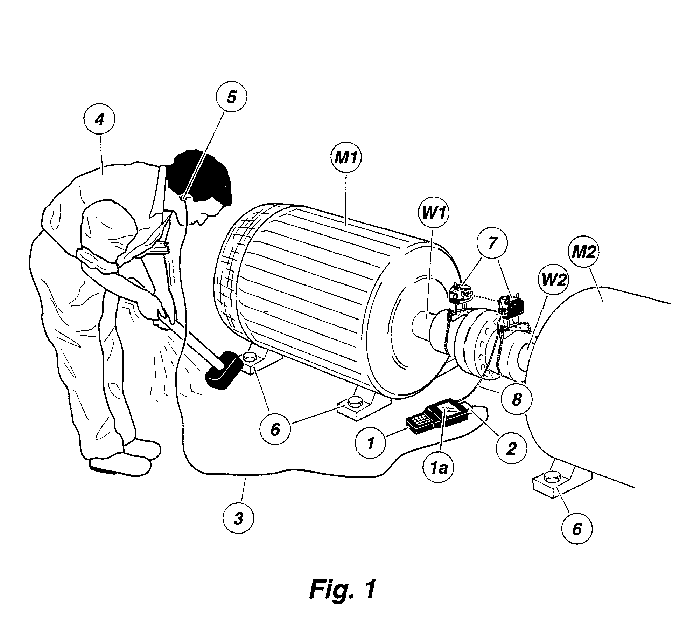

- Fig. 1: in perspektivischer schematischer Darstellung einen Maschinenausrichter beim Ausrichten der Maschine durch Ausüben von Schlägen gegen die Maschinenfüße,
- Fig. 2: in schematischer Darstellung ein Ausführungsbeispiel einer zum Durchführen des erfindungsgemäßen Verfahrens geeigneten Ansageeinheit, und
- Fig. 3: eine Bedienungsperson beim Handhaben der Sensoreinrichtung mittels eines Rechners, der nur ein einfaches LCD-Display für die optische Anzeige von Angaben der Bedienerführung aufweist.

Bei den in den Ausführungsbeispielen zum Einsatz kommenden Ausrichtsystemen handelt es sich, was die Mittel zum Gewinnen der aktuellen Meß- und Korrekturwerte zum Erreichen des gewünschten Fluchtungszustandes der Wellen W1 und W2 durch Verändern der gegenseitigen Position der Maschinen M1 und M2 anbetrifft, um das bekannte sogenannte Optalign-System gemäß EP-B1-0 145 745. Die Anzeige der errechneten Korrekturwerte erfolgte bei diesem bekannten System bisher nur rein optisch mittels eines rechnergesteuerten Displays 1a an einem Bedienteil 1, das gewöhnlich auch den Ausrichtrechner (Hauptprozessor) enthält.

Von diesem bekannten System unterscheidet sich das in der Zeichnung schematisch wiedergebene dadurch, daß außer einer optischen Anzeige der durchzuführenden Korrekturmaßnahmen mittels eines rechnergesteuerten Displays 1a auch eine akustische Übermittlung dieser Korrekturwerte eingerichtet ist.

Der Rechner kann auch beim dargestellten Ausführungsbeispiel in bekannter Weise in ein gesondertes, vom Bedienenden in die Hand nehmbares Bedienteil 1 eingebaut sein.

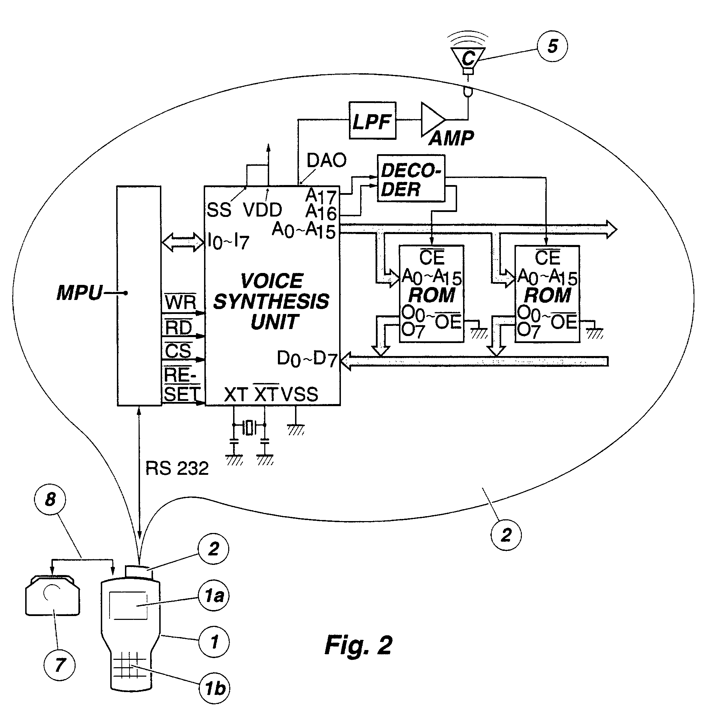

Die Korrekturwerte werden z. B. mittels eines von dem Rechner im Bedienteil 1 gesteuerten, vorzugsweise ebenfalls in dieses eingebauten Tongenerators (nicht dargestellt) in Form eines codierten Tones oder als sprachliche Anweisung mittels eines rechnergesteuerten Sprachspeicherbausteins oder, wie insbesondere aus Fig. 2 ersichtlich, einer vom Rechner im Bedienteil 1 gesteuerten, einen Sprachsynthesizerbaustein als Sprachsyntheseeinheit VSU aufweisenden Ansageeinrichtung 2 laufend erzeugt und über ein Kabel 3 an einen vom Maschinenausrichter 4 getragenen Kopf- oder Ohrhörer 5 übertragen, so daß der Maschinenausrichter 4 sein Augenmerk voll der Verlagerung der Maschinenfüße 6 in der erforderlichen Weise widmen kann.

Die Meßwerte werden von der Sensoreinheit 7 in bekannter Weise erzeugt und an den im Bedienteil 1 befindlichen Ausrichterrechner geliefert, was, wie dargestellt, über ein Kabel 8 oder auch drahtlos geschehen kann.

Anstelle der Unterbringung des üblichen Ausrichtrechners in einem gesonderten Bedienteil 1 könnte ein baulich kleiner Rechner zusammen mit der Ansageeinrichtung 2 auch in die Sensoreinheit 7 integriert sein.

Bei dem dargestellten Ausführungsbeispiel ist für die Übertragung der akustischen Signale zum Kopf- oder Ohrhörer 5 das Kabel 3 vorgesehen, doch ist prinzipiell auch eine drahtlose Übertragung, z.B. eine Funk- oder IR-Verbindung, dafür einsetzbar.

Das dem Maschinenausrichter 4 zugeführte akustische Signal kann ein Ton sein, dessen Höhe, d.h. Fequenz, abhängig von der Größe des im Augenblick noch nötigen Korrekturwertes gesteuert ist, wobei mit diesem Ton vorzugsweise ein weiterer, jedoch frequenzfester Ton übertragen wird, dessen Höhe dem Korrekturwert Null entspricht, so daß in diesem Falle ein Doppelton zu hören ist, solange ein Fluchtungsfehler besteht, und dieser Doppelton in einen Einfachton übergeht, sobald der Fluchtungszustand erreicht ist.

Als die noch vorzunehmende Korrektur nach Größe und Richtung beschreibender Ton eignet sich auch ein getakteter Ton, dessen Tastverhältnis und/oder Taktfrequenz der Größe der an dem jeweils vorgegebenen Stützpunkt in eine vorbestimmten Richtung vorzunehmenden Korrektur entspricht.

Eine weitere besonders komfortable Möglichkeit der akustischen Übermittlung der Korrekturwerte an den Maschinenausrichter 4 ist die Erzeugung einer sprachlichen Information über den im Augenblick noch nötigen Korrekturwert nach Größe und Richtung sowie mit Benennung des betroffenen Stützpunktes mit Hilfe eines Sprachspeicherbausteins oder, wie in Fig. 2 zu sehen, mittels einer eine Sprachsyntheseeinheit VSU enthaltenden Ansageeinrichtung 2, die rechnergesteuert z.B. die Ansage "Fuß hinten links um 1,25 mm verschieben... noch 0,9... 0,7... 0,4... 0,1... stop... 0,1 zurück ... stop, ... jetz vorderen Fuß um 2,15 mm verschieben... " u. s.w. erzeugt.

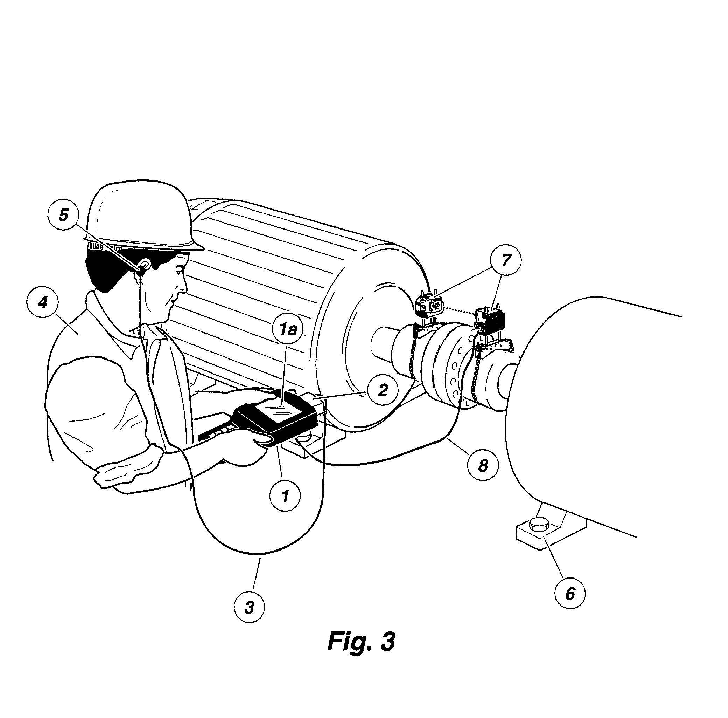

Auch wenn es nicht um die eigentliche Durchführung des Ausrichtvorganges geht, kann, wie aus Fig. 3 ersichtlich, eine akustische Ausgabe von Anweisungen dann zweckmäßig sein, wenn zur optischen Darstellung nur ein einfaches LCD-Display 1a mit festen Symbolen verfügbar ist. Auf einem solchen Display läßt sich beispielsweise die Angabe "Befestigen Sie die Schnellspannvorrichtung der Sensoreinheit mit Hilfe der Kette auf der Antriebswelle so nahe wie möglich an der Kupplung..." nicht anschaulich grafisch darstellen, doch ermöglicht dies rechnergesteuert ein Sprachspeicherbaustein oder eine mit einer Sprachsyntheseeinheit ausgerüstete Ansageeinrichtung.

Ein Pixel-Display mit der benötigten zugehörigen elektronischen Steuerung ist demgegenüber im allgemeinen erheblich teuerer und auch nur innerhalb eines eine relativ niedrige zulässige Höchst-temperatur aufweisenden begrenzten Temperaturbereichs einsetzbar, der unter den am Arbeitsort auszurichtender Maschinen häufig vorliegenden Umgebungsbedingungen nicht zu gewährleisten ist.

Die Fig. 2 zeigt in schematischer Darstellung ein Ausführungsbeispiel einer zum Durchführen des erfindungsgemäßen Verfahrens geeigneten, vom Rechner im Bedienteil 1 gesteuerten Ansageeinheit 2. Beim Ausführungsbeispiel gemäß der Zeichnung ist die Ansageeinheit 2 an das Bedienteil 1 angesteckt, doch könnte sie auch mit diesem über Kabel verbunden oder in dieses integriert sein.

Der im Bedienteil 1 vorhandene Rechner arbeitet, wie bereits gesagt, mit dem Sensor 7 zusammen, der den aktuellen Parallel- und Winkelversatz der miteinander gekuppelten Wellen W1 und W2, deren Fluchtungszustand zu prüfen und ggf. zu korrigieren ist, in mehreren unterschiedlichen Winkelpositionen mißt und entsprechende elektrische Meßsignale an den Rechner im Bedienteil 1 liefert.

Der Rechner errechnet aus den von der Sensoreinheit 7 gelieferten Meßsignalen und aus weiteren in ihn ggf. über eine Tastatur 1b am Bedienteil 1 eingegebenen Daten, insbesondere der relativen Position der Füße 6 der Maschine M1 untereinander und bezüglich der Position der Füße 6 der Maschine M2, also bezüglich vorbekannter Bezugspunkte auf dem Fundament, laufend Korrekturwerte, die besagen, in welcher Richtung und um welches Maß die Maschinenfüße 6 der Maschine M1 gegenüber ihrer aktuellen Position noch verlagert werden müssen, um die Drehachsen der Wellen W1 und W3 genau in die Flucht zu bringen.

Die den errechneten Korrekturwerten entsprechenden Daten werden vom Rechner her in die Ansageeinheit 2 eingegeben. Diese weist eine Mikroprozessoreinheit MPU und einen mit dieser verbundenen und von dieser gesteuerten Sprachsynthesizer- oder Sprachsynthesebaustein (VOICE SYNTHESIS UNIT) VSU auf. An diese Sprachsyntheseeinheit VSU sind ein Decoder und mehrere über diesen gesteuert aufrufbare ROMS angeschlossen, und die Sprachsyntheseeinheit VSU liefert an einen Analogaus gang DAO eine ausgewählte Sprachsequenz als analoges elektrisches Signal über ein Tiefpaßfilter LPF und einen Verstärker AMP an einen Lautsprecher und/oder an den vom Maschinenausrichter 4 getragenen Ohrhörer 5.

Die Mikroprozessoreinheit MPU vermag bei der Sprachsyntheseeinheit VSU mehrere verschiedene, passend gestaltete Sprachsequenzen auszuwählen, und zwar abhängig von den Korrekturdaten, die ihr beim Ausführungsbeispiel über eine Schnittstelle RS 232 von dem im Bedienteil 1 befindlichen Rechner her zugeführt werden. Der Datenaustausch zwischen MPU und VSU findet über eine an die Datenanschlüsse I₀ - I₇ der Sprachsyntheseeinheit VSU geführte Datenleitung statt, und die Sprachsyntheseeinheit VSU wird von der Mikroprozessoreinheit MPU an den Eingängen WR (Wright), RD (Read), CS (Chip-Select) und RESET in passender Weise gesteuert.

Die benötigten Sprachsequenzen sind digital in einem oder mehreren ROMS abgespeichert, deren Speicherbereiche von Anschlüssen A₀ - A₁₅ der Sprachsyntheseeinheit VSU her über digitale, zu Anschlüssen A₀ - A₁₅ der ROMs führende Adressenleitungen abrufbar sind, wobei die einzelnen ROMs mittels -des an Selektionsanschlüsse A₁₆ und A₁₇ angeschlossenen Decoders selektiv zur Ausgabe der aufgerufenen Sprachsequenzen aktivierbar sind. Die aufgerufenen, digital kodierten Sprachsequenzen gelangen über eine an die Datenausgänge O₀ - O₇ der ROMs angeschlossene und zu den Dateneingängen D₀ - D₇ der Sprachsyntheseeinheit VSV führende Datenleitung in diese und werden mittels einer darin vorhandenen Digital-Analog-Wandlereinrichtung in das analoge elektrische Sprachsignal umgesetzt, das am Ausgang DAO ausgegeben wird.

Auf die gleiche Weise können auf der Grundlage weiterer, in ROMs digital abgespeicherter Daten unter der Steuerung des Rechners im Bedienteil 1 und der Mikroprozessoreinheit MPU auch der Bedienerführung dienende Sprachsequenzen am VSU-Ausgang DAO ausgegeben werden, was insbesondere von Vorteil ist, wenn die diesbezügliche Bedieneranweisung aus irgendeinem Grunde nicht oder nicht ausreichend übersichtlich am Display 1a des Bedienteils 1 darstellbar ist.

Wenn der Rechner (Hauptprozessor) genügend leistungsstark ist, kann er auch die Funktion der Mikroprozessoreinheit MPU umfassen, so daß diese dann in der Ansägeeinheit 2 entfallen kann.

## Patentansprüche

1. Verfahren zum Ausrichten der Welle (W1) einer an vorgegebenen Stützpunkten (6) auf einem Fundament abgestützten rotierenden Maschine (M1) in eine vorbestimmte räumliche Sollage durch Verlagern der Maschine (M1) auf dem Fundament, wobei
a) die augenblickliche Lage der Welle (W1) bezüglich der Sollage mittels einer Sensoreinrichtung (7) festgestellt wird, die der Differenz zwischen der augenblicklichen Lage der Welle (W1) und der Wellensollage entsprechende elektrische Lagesignale liefert,
b) aus diesen Lagesignalen, der bekannten Position der Stützpunkte (6) bezüglich vorgegebener Bezugspunkte auf dem Fundament und anderweitigen geometrischen maschinen- und/oder fundamentbezogenen geometrischen Meßdaten mittels eines Rechners Korrekturwerte für an den einzelnen Stützpunkten (6) zum Erreichen der Wellensollage jeweils vorzunehmende Lagekorrekturen errechnet werden, und
c) die Korrekturwerte dem die Lagekorrekturen vornehmenden Ausrichtpersonal (4) für jeden Stützpunkt (6) nach Größe und Richtung zur Kenntnis gebracht werden,
**dadurch gekennzeichnet,** daß
die aktuellen Korrekturwerte für die einzelnen Stützpunkte (6) dem Ausrichtpersonal (4) akustisch übermittelt werden.

2. Verfahren nach Anspruch 1, **dadurch gekennzeichnet,** daß dem Ausrichtpersonal (4) auch Anweisungen einer rechnergesteuerten Bedienerführung insbesondere zum Bedienen des Rechners und zur Handhabung der Sensoreinrichtung (7) akustisch übermittelt werden.

3. Verfahren nach Anspruch 1 oder 2, **dadurch gekennzeichnet,** daß der Rechner in die Sensoreinrichtung (7) integriert ist.

4. Verfahren nach einem der Ansprüche 1 bis 3, **dadurch gekennzeichnet,** daß die Korrekturwerte jeweils in Form eines kodierten Tones übermittelt werden.

5. Verfahren nach Anspruch 4, **dadurch gekennzeichnet,** daß die Frequenz des Tones der Größe der an einem vorgegebenen Stützpunkt (6) in einer vorgegebenen Richtung vorzunehmenden Korrektur entspricht.

6. Verfahren nach Anspruch 5, **dadurch gekennzeichnet,** daß neben dem Ton mit entsprechend den Korrekturwerten veränderlicher Frequenz permanent ein Ton von dem Korrekturwert Null entsprechender Frequenz übermittelt wird.

7. Verfahren nach Anspruch 4, **dadurch gekennzeichnet,** daß der Ton getaktet ist, wobei das Tastverhältnis und/oder die Taktfrequenz der Größe der an einem vorgegebenen Stützpunkt (6) in einer vorbestimmten Richtung vorzunehmenden Korrektur entspricht.

8. Verfahren nach einem der Ansprüche 1 bis 3, **dadurch gekennzeichnet,** daß dem Ausrichtpersonal (4) die einzelnen Korrekturwerte nach Größe und Richtung sowie mit Benennung des betroffenen Stützpunktes (6) sowie ggf. Anweisungen der Bedienerführung mit Hilfe eines Sprachspeicherbausteins oder einer einen Sprachsynthesizerbaustein (VSU) aufweisenden Ansageeinrichtung (2) laufend angesagt werden.

9. Verfahren nach einem der vorhergehenden Ansprüche, **dadurch** **gekennzeichnet,** daß die akustische Übermittlung der Korrekturwerte über Lautsprecher oder Ohrhörer (5) erfolgt.

10. Verfahren nach Anspruch 9, **dadurch gekennzeichnet,** daß die Ton- bzw. Sprachinformation drahtlos über eine Funk- oder IR-Strecke zu dem Lautsprecher bzw. Ohrhörer (5) übertragen wird.

11. Verfahren nach einem der vorhergehenden Ansprüche, **dadurch gekennzeichnet,** daß die errechneten Korrekturwerte auch visuell auf einem Display (1a) angezeigt werden.

12. Vorrichtung zum Durchführen des Verfahrens nach einem der vorhergehenden Ansprüche, mit
a) einer an der auszurichtenden Welle (W1) montierbaren Sensoreinrichtung (7) zum Feststellen der augenblicklichen Lage der Welle (W1) bezüglich der Sollage, wobei die Sensoreinrichtung (7) der Differenz zwischen der augenblicklichen Wellenlage und der Wellensollage entsprechende elektrische Lagesignale liefert,
b) einem elektronischen Rechner, der aus den in ihn von der Sensoreinrichtung (7) eigespeisten elektrischen Lagesignalen und aus in ihn eingegebenen, u.a. für die Position der Stützpunkte (6) der Maschine (M1) bezüglich Bezugspunkten auf dem Fundament charaktristischen geometrischen Meßdaten Korrekturwerte für die an den einzelnen Stützpunkten (6) der Maschine (M1) zum Erreichen der Wellensollage jeweils vorzunehmenden Lagekorrekturen errechnet, und
c) einer Einrichtung, die dem die Lagekorrekturen vornehmenden Ausrichtpersonal (4) die errechneten Korrekturwerte für jeden Stützpunkt (6) nach Größe und Richtung zur Kenntnis bringt, **gekennzeichnet durch** eine von dem Rechner gesteuerte Einrichtung (2) zum Erzeugen von mindestens für die Größe der errechneten Korrekturwerte charakteristischen akustischen Signalen.

13. Vorrichtung nach Anspruch 12, **dadurch gekennzeichnet,** daß der Rechner und die Einrichtung (2) zum Erzeugen der akustischen Signale in ein gesondertes Bedienteil (1) integriert bzw. daran angebracht sind.

14. Vorrichtung nach Anspruch 12, **dadurch gekennzeichnet,** daß der Rechner und die Einrichtung (2) zum Erzeugen der akustischen Signale in die Sensoreinrichtung (7) integriert sind.

15. Vorrichtung nach einem der Ansprüche 12 bis 14, **gekennzeichnet durch** einen von dem Rechner gesteuerten, direkt oder über eine Funk- oder IR-Strecke drahtlos mit mindestens einem Lautsprecher und/oder Ohrhörer (5) verbundenen Tongenerator.

16. Vorrichtung nach einem der Ansprüche 12 bis 14, **gekennzeichnet durch** einen von dem Rechner gesteuerten, direkt oder über eine Funk- oder IR-Strecke drahtlos mit mindestens einem Lautsprecher und/oder Ohrhörer verbundenen Sprachspeicherbaustein.

17. Vorrichtung nach einem der Ansprüche 12 bis 14, **gekennzeichnet durch** eine von dem Rechner gesteuerte, direkt oder über eine Funk- oder IR-Strecke drahtlos mit mindestens einem Lautsprecher oder Ohrhöhrer (5) verbundene, einen Sprachsynthesizer-Baustein (VSU) aufweisende Ansageeinheit (2).

18. Vorrichtung nach einem der Ansprüche 12 bis 17, **gekennzeichnet durch** ein von dem Rechner gesteuertes Display (1a) zum stützpunktbezogenen Anzeigen der von dem Rechner errechneten Korrekturwerte.

## Claims

1. Method for alignment of the shaft (W1) of a rotating machine (M1), which is supported at predetermined mounting points (6) on a base, in a predetermined three-dimensional nominal position by moving the machine (M1) on the base,
a) the instantaneous position of the shaft (W1) with respect to the nominal position being detected by means of a sensor device (7) which provides electrical position signals corresponding to the difference between the instantaneous position of the shaft (W1) and the shaft nominal position,
b) these position signals, the known position of the mounting points (6) with respect to the predetermined reference points on the base and other geometric machine data and/or geometric measurement data related to the base being used to calculate, by means of a computer, correction values for position corrections to be made at each of the individual mounting points (6) in order to achieve the shaft nominal position, and
c) the magnitude and direction of the correction values for each mounting point (6) being brought to the attention of the alignment technician (4) who will make the position corrections,
**characterized in that**
the current correction values for the individual mounting points (6) are transmitted to the alignment technician (4) acoustically.

2. Method according to Claim 1, **characterized in that** instructions from computer-controlled operator guidance, in particular for operation of the computer, and for handling of the sensor device (7), are also transmitted to the alignment technician (4) acoustically.

3. Method according to Claim 1 or 2, **characterized in that** the computer is integrated in the sensor device (7).

4. Method according to one of Claims 1 to 3,
**characterized in that** the correction values are in each case transmitted in the form of a coded tone.

5. Method according to Claim 4, **characterized in that** the frequency of the tone corresponds to the magnitude of the correction to be made in a predetermined direction at a predetermined mounting point (6).

6. Method according to Claim 5, **characterized in that,** in addition to the tone at a variable frequency corresponding to the correction values, a tone at the frequency corresponding to the correction value zero is permanently transmitted.

7. Method according to Claim 4, **characterized in that** the tone is pulsed, the duty ratio and/or the pulse frequency corresponding to the magnitude of the correction to be made in a predetermined direction at a predetermined mounting point (6).

8. Method according to one of Claims 1 to 3,
**characterized in that** the magnitude and direction of the individual correction values are stated continuously to the alignment technician (4) together with the identification of the relevant mounting point (6) and, if required, with instructions for operator guidance with the aid of a voice memory module or an announcement device (2) having a voice synthesis unit (VSU).

9. Method according to one of the preceding claims, **characterized in that** the correction values are transmitted acoustically via a loudspeaker or earpiece (5) .

10. Method according to Claim 9, **characterized in that** the tone or voice information is transmitted without wires via a radio link or IR link to the loudspeaker or earpiece (5).

11. Method according to one of the preceding claims, **characterized in that** the calculated correction values are also indicated visually on a display (1a).

12. Apparatus for carrying out the method according to one of the preceding claims, having
a) a sensor device (7), which can be mounted on the shaft (W1) to be aligned, for detecting the instantaneous position of the shaft (W1) with respect to the nominal position, the sensor device (7) providing electrical position signals corresponding to the difference between the instantaneous shaft position and the shaft nominal position,
b) an electronic computer which uses the electrical position signals supplied to it by the sensor device (7) and geometric measurement data which are entered in it and are characteristic, inter alia, of the position of the mounting points (6) of the machine (M1) with respect to reference points on the base to calculate correction values for the position corrections to be made in each case at the individual mounting points (6) of the machine (M1) in order to achieve the shaft nominal position, and
c) a device which informs the alignment technician (4) carrying out the position corrections of the magnitude and direction of the calculated correction values for each mounting point (6),
**characterized by** a device (2) which is controlled by the computer for producing acoustic signals which are characteristic at least of the magnitude of the calculated correction values.

13. Apparatus according to Claim 12, **characterized in that** the computer and the device (2) for producing the acoustic signals are integrated in a separate control unit (1), or are fitted to it.

14. Apparatus according to Claim 12, **characterized in that** the computer and the device (2) for producing the acoustic signals are integrated in the sensor device (7).

15. Apparatus according to one of Claims 12 to 14,
**characterized by** a tone generator which is controlled by the computer and is connected directly or via a radio link or IR link, without wires, to at least one loudspeaker and/or earpiece (5).

16. Apparatus according to one of Claims 12 to 14,
**characterized by** a voice memory module which is controlled by the computer and is connected directly or via a radio link or IR link, without wires, to at least one loudspeaker and/or earpiece.

17. Apparatus according to one of Claims 12 to 14,
**characterized by** an announcement unit (2) which is controlled by the computer, is connected directly or via a radio link or IR link, without wires, to at least one loudspeaker and/or earpiece (5) and has a voice synthesis unit (VSU).

18. Apparatus according to one of Claims 12 to 17,
**characterized by** a computer-controlled display (1a) for indicating, with respect to the mounting points, the correction values calculated by the computer.

## Revendications

1. Procédé pour centrer l'arbre (Wl) d'une machine rotative (M1) reposant sur des points d'appui donnés (6) sur une fondation dans une situation spatiale prédéfinie voulue en déplaçant la machine (M1) sur la fondation,
a) la situation instantanée de l'arbre (W1) par rapport à la situation voulue étant déterminée par un dispositif de détection (7) qui délivre un signal électrique de situation correspondant à la différence entre la situation instantanée de l'arbre (W1) et la situation voulue de l'arbre,
b) des valeurs de correction étant calculées à partir de ces signaux de situation, de la position connue des points d'appui (6) par rapport à des points de référence prédéfinis sur la fondation et d'autres données de mesure géométriques relatives à la machine et/ou à la fondation, à l'aide d'un calculateur pour les corrections de situation à effectuer respectivement sur chacun des points d'appui (6) pour atteindre la situation voulue de l'arbre, et
c) les valeurs de correction de la grandeur et de la direction pour chaque point d'appui (6) étant portées à la connaissance du personnel centreur (4) chargé d'effectuer les corrections de situation,
caractérisé en ce que les valeurs de correction courantes pour les différents points d'appui (6) sont communiquées au personnel centreur (4) sous forme sonore.

2. Procédé selon la revendication 1, caractérisé en ce que le personnel centreur (4) reçoit également des instructions sonores d'un guide de l'utilisateur commandé par ordinateur, notamment pour commander le calculateur et pour manipuler le dispositif de détection (7).

3. Procédé selon la revendication 1 ou 2,
caractérisé en ce que le calculateur est intégré dans le dispositif de détection (7).

4. Procédé selon l'une des revendications 1 à 3,
caractérisé en ce que les valeurs de correction sont chacune communiquées sous la forme d'un son codé.

5. Procédé selon la revendication 4, caractérisé en ce que la fréquence du son correspond à la grandeur de la correction à apporter sur un point d'appui (6) donné dans une direction donnée.

6. Procédé selon la revendication 5, caractérisé en ce qu'un son dont la fréquence correspond à une valeur de correction nulle est émis en permanence en plus du son dont la fréquence varie en fonction des valeurs de correction.

7. Procédé selon la revendication 4, caractérisé en ce que le son est alterné, le rapport cyclique et/ou la fréquence d'alternance correspondant à la grandeur de la correction à effectuer dans une direction donnée sur un point d'appui (6) donné.

8. Procédé selon l'une des revendications 1 à 3,
caractérisé en ce que les différentes valeurs de correction en fonction de la grandeur et de la direction et avec mention du point d'appui (6) concerné et, le cas échéant, les éventuelles instructions du guide de l'utilisateur sont communiquées en permanence au personnel centreur (4) à l'aide d'une mémoire vocale ou d'un dispositif d'annonce équipé d'un composant de synthèse vocale (VSU).

9. Procédé selon l'une des revendications précédentes, caractérisé en ce que la communication sonore des valeurs de correction est effectuée par le biais d'un haut-parleur ou d'un écouteur (5).

10. Procédé selon la revendication 9, caractérisé en ce que l'information sonore ou vocale est transmise sans fil au haut-parleur ou à l'écouteur (5) par le biais d'une liaison radioélectrique ou à infrarouges.

11. Procédé selon l'une des revendications précédentes, caractérisé en ce que les valeurs de correction calculées sont également signalées visuellement sur un afficheur (1a).

12. Dispositif pour exécuter le procédé selon l'une des revendications précédentes, avec
a) un dispositif de détection (7) pouvant être fixé sur l'arbre (W1) à centrer et destiné à déterminer la situation instantanée de l'arbre (W1) par rapport à la situation voulue, le dispositif de détection (7) délivrant un signal électrique de situation correspondant à la différence entre la situation instantanée de l'arbre et la situation voulue de l'arbre,
b) un calculateur électronique qui calcule les valeurs de correction à partir des signaux électriques de situation qui lui sont acheminés par le dispositif de détection (7) et à partir des données de mesure géométriques caractéristiques qui lui sont entrées notamment pour la position des points d'appui (6) de la machine (M1) par rapport aux points de référence sur la fondation pour les corrections de situation à effectuer respectivement sur chacun des points d'appui (6) de la machine (M1) pour atteindre la situation voulue de l'arbre, et
c) un dispositif qui porte à la connaissance du personnel centreur (4) chargé d'effectuer les corrections les valeurs de correction calculées de la grandeur et de la direction pour chaque point d'appui (6),
caractérisé par un dispositif (2) commandé par le calculateur pour générer au moins les signaux sonores caractéristiques de la grandeur des valeurs de correction calculées.

13. Dispositif selon la revendication 12,
caractérisé en ce que le calculateur et le dispositif (2) pour générer les signaux sonores sont intégrés dans un élément de commande (1) spécial ou montés sur celui-ci.

14. Dispositif selon la revendication 12,
caractérisé en ce que le calculateur et le dispositif (2) pour générer les signaux sonores sont intégrés dans le dispositif de détection (7).

15. Dispositif selon l'une des revendications 12 à 14, caractérisé par un générateur de sons commandé par le calculateur et relié à au moins un haut-parleur et/ou écouteur (5) directement ou par le biais d'une liaison sans fil radioélectrique ou à infrarouges.

16. Dispositif selon l'une des revendications 12 à 14, caractérisé par une mémoire vocale commandée par le calculateur et reliée à au moins un haut-parleur et/ou écouteur directement ou par le biais d'une liaison sans fil radioélectrique ou à infrarouges.

17. Dispositif selon l'une des revendications 12 à 14, caractérisé par un dispositif d'annonce (2) équipé d'un composant de synthèse vocale (VSU) commandé par le calculateur et relié à au moins un haut-parleur et/ou écouteur (5) directement ou par le biais d'une liaison sans fil radioélectrique ou à infrarouges.

18. Dispositif selon l'une des revendications 12 à 17, caractérisé par un afficheur (1a) commandé par le calculateur pour afficher les valeurs de correction calculées par le calculateur en fonction des points d'appui.
